# EUROPEAN PATENT SPECIFICATION

(11) **EP 3 774 243 B1**
(45) Date of publication and mention of the grant of the patent: **12.07.2023**
(21) Application number: 19781240.7
(22) Date of filing: 03.04.2019
(51) Int. Cl.: B27N 1/00, B27N 3/04, D04H 1/04, B27K 3/15, B29C 51/00, C08J 5/06, D04H 1/00, B27N 5/00

(54) **METHOD FOR MANUFACTURING A DRY-LAID MAT FOR THERMOFORMING**
VERFAHREN ZUR HERSTELLUNG EINER TROCKENGELEGTEN MATTE ZUM THERMOFORMEN
PROCÉDÉ DE FABRICATION D'UN MAT DÉPOSÉ PAR VOIE SÈCHE POUR THERMOFORMAGE

(30) Priority: 04.04.2018 SE 1850372
(43) Date of publication of application: 17.02.2021
(73) Proprietor: Stora Enso Oyj, 00101 Helsinki (FI)
(72) Inventor: MAYES, Duncan, 00101 Helsinki (FI); PYNNÖNEN, Janne, 37550 Lempäälä (FI); TÖRNBLOM, Maria, 302 42 Halmstad (SE)
(74) Representative: Glindell, Maria
(86) International application number: PCT/IB2019/052710
(87) International publication number: WO 2019/193504

(56) References cited:
- WO-A1-2014/142714
- US-A- 5 382 609
- US-A1- 2002 074 095
- US-A1- 2002 074 095
- US-A1- 2002 112 296
- US-A1- 2002 112 296
- US-A1- 2005 247 419
- US-A1- 2009 264 560

## Description

### Technical field

The present invention is directed to a method for manufacturing a dry-laid mat suitable for thermoforming as defined in claim 1.

The present disclosure is directed to a dry forming process, wherein cellulosic or lignocellulosic fibers have been impregnated, but not cross linked, with a cross linking agent prior to forming in a dry forming method. The disclosure is also directed to dry-laid mats manufactured according to the method as well as to thermoformed products manufactured from such dry-laid mats.

### Background

With the growing concern for humanly induced climate change and the depletion of non-renewable resources, interest in replacing materials derived from petroleum with those emanating from renewable, natural, raw materials has soared. In contrast to petroleum, which is a finite resource, natural materials, such as wood, are constantly regrown and renewed and also act as a carbon dioxide trap during this regrowth. Paper, board and fiberboard, such as MDF, are materials derived from natural fibers which have been on the market for a very long time and still have many applications. The stiffness and rigidity of these materials which, once they are set, makes it impossible to form them into any arbitrary 3-dimensional structure limit their applicability, however. In a market where design is a selling point for both products and their packaging formability is a much desired property and one of the main reasons for the advancement of thermoplastic polymers since these were invented.

The rigidity of paper and board materials arises from the fiber-fiber bonds that join the rigid fibers in the network structure. These are formed mediated by the water in the manufacturing process, and consolidated with the removal of this water in the drying step. They provide strength and stiffness to the web in dry form. Thus neither paper or board nor fiberboard show any thermoplasticity and cannot be made malleable or moldable upon heating. To make a material based on natural fibers moldable there would have to be no fiber-fiber bonds of the paper type but the fibers would have to be able to move in respect to each other, at least until the material if formed to its final shape. The basic types of such materials are melt mixed natural fiber-polymer composites which have been described since the 1980's (D.Maldas, B.V. Kokta and C. Daneault, Journal of Applied Polymer Science, 1989, vol. 38, pp. 413-439; US 4,376,144; US 4,791,020). If the matrix polymer in this process is hydrophobic, it is common practice to add coupling agents to compatibilize the fibers and the matrix and improve the properties of the finished composite material. These are usually polymers grafted or co-polymerized with groups that may form covalent bonds with cellulosic and lignin surfaces in the mixing process.

Another way of approaching the concept of formable natural fiber materials is to form the fiber materials into webs or mats by dry forming methods such as air-laying (US 3,575,749) or the dry forming methods used for fiberboards. In these cases there are no water mediated fiber-fiber bonds and the mats can theoretically be formed by standard methods such as matched molds thermoforming, a process during which the initially porous materials also are compacted to a much higher density. For the integrity and strength of the dry-laid mat, prior to pressing under elevated temperature, the fibers need to bond to each other by some means, however, why a polymer binder is often introduced into the fiber mix in the laying process. This binder will help to keep the structure of the dry-laid mats during handling and transport. If this binder is a thermoplastic material, the mat is formable into 3D structures when the polymer binder is softened by heating (EP1840043A1, EP1446286A1). In fiberboard the fibers are bound to each other by the addition of a resin that glue the fibers together. In standard fiberboard qualities this is a thermoset resin (traditionally urea/formaldehyde) which gives a board that is not formable upon heating. Methods where the binder is at least partially thermoplastic has been presented (US 4,474,846, WO 2007/073218 A1) which would give a formable MDF like board after an initial pressing and consolidation operation.

The latter concepts allow for much higher fiber loading in the composite but with that the hygroscopic character of cellulose and lignocellulose fiber have an even larger influence on the material finally produced. Cellulose and lignocellulose fibers swell when they absorb moisture from air or water. This is a problem already in melt mixed composites where it may cause swelling and deformation of the entire material, color shifts and, with time, decreasing strength properties. It also promotes the growth of mold and fungi both in and onto the composite. With increasing fiber content these problems will increase until the material, just like untreated paper, will disintegrate when wet or sufficiently moist.

US 2002/112296 A1 describes a method of making a cellulosic fibrous product which comprises airlaying cellulosic fibers to provide a fibrous web, wherein at least a portion of the cellulosic fibers are treated with an amount of crosslinking agent effective to provide a bonded product. The method further comprises heating the web to provide a bonded cellulosic product.

WO 2014/142714 A1 describes a process for producing a dry-laid composite intermediate web, wherein a dry-laid web comprising CTMP fibers is firstly formed and thereafter a thermoplastic material is added to the web by impregnation.

US 2002/074095 A1 describes a process for producing wood particleboard, in which wood particles are treated with a crosslinkable binder and are subsequently pressed together under pressure and, if desired, elevated temperature to produce boards.

Thus, there is a need for methods for manufacturing mats or webs suitable for thermoforming, which will provide improved properties of the thermoformed products.

### Summary of the invention

It has surprisingly been found that the problems described above can be partly or fully avoided by the method according to the present invention.

The present invention is directed to a method for manufacturing a dry-laid mat suitable for thermoforming, as defined in claim 1.

In the context of the present invention, the term mat suitable for thermoforming refers to a sheet, web or mat which can be shaped into a three-dimensional shape and simultaneously consolidated by thermoforming, i.e. by exposure to heat and pressure. During the thermoforming, the mat is exposed to temperatures of from 150°C to 220°C, under pressure. The pressure used during thermoforming is typically at least 1-100 MPa. The conditions used for thermoforming are such that the cross linking reaction, i.e. curing, takes place at the same time as the thermoforming.

With the method according to the present disclosure, the temperatures used in step a) and step b) are such that essentially no cross linking reaction occurs during step a) or step b). Since the cross linking reaction takes place at the same time as the thermoforming, the cross linking achieved is not only intrafiber cross linking, but also interfiber cross linking, i.e. cross linking between individual fibers is achieved, which leads to improved moisture resistance and dimensional stability of the formed products, after thermoforming. Therefore, there is typically less need for addition of any hydrophobation agent to the mats prepared by the method according to the present invention.

When dry forming a mat in step b), the mat may also comprise up to 40% by weight (by dry weight of the material from which the mat is formed) of at least one polymer, wherein according to the invention the mat formed in step b) comprises at least one thermoplastic polymer. Preferably, the amount of polymer is less than 30% by weight, more preferably less than 20% by weight. Preferably, the amount of polymer is at least 1 % by weight.

When dry forming a mat in step b), the mat may also comprise up to 10% by weight (by dry weight of the material from which the mat is formed) of additives, such as coupling agents, pigments, colorants, fire retardants, fungicides etc.

When dry forming a mat in step b) of the method according to the present invention, the moisture content of the product of step a) is less than 10% by weight of the product of step a) used in step b).

The dry forming process used in step b) of the method according to the present invention is any dry forming process useful for the preparation of mats. Examples of such dry forming processes include air-laying. In dry forming processes, the components used when forming the sheet are provided in essentially dry form. During the dry forming process in step b), the product of step a) may also be heated at such conditions that the temperature of the fibers does not exceed 150°C. Preferably, the temperature used in step b) is from 30°C to 150°C, more preferably from 50°C to 150°C, most preferably from 100°C to 150°C. If a thermoplastic polymer, such as bicomponent or single component fibers are incorporated into the sheet, such heating leads to melting of at least the outer layer of such fibers, thereby binding the components of the mat together.

### Detailed description

In the method according to the present disclosure, a dry-laid mat suitable for thermoforming is manufactured, wherein the fibrous material of the mat is not cross linked until at the time of thermoforming.

The term "dry-laid" refers to a web formation process in which a web is formed by mixing the components to be used in the mat, such as fibers, with air to form a uniform air-fiber mixture which is then deposited on a moving air-permeable belt or wire.

During the cross linking reaction, the natural cellulose or lignocellulose fibers are chemically cross linked by a reaction at, at least, two sites with a cross linking agent which contains at least two chemical groups able to react with groups on these fibers. By this cross linking, the ability of the fiber wall to swell in contact with moisture will decrease radically and the fiber will be much less sensitive to contact with moisture in air or water. Both inter-fiber and intra-fiber cross linking can be achieved, wherein the inter-fiber cross linking particularly contributes to strength of the final product. The mat produced according to the present disclosure may also comprise thermoplastic binders or matrixes which may contain compatibilizing substances and other additives. The mat produced is dry-laid, such as a dry-laid fiber mat, suitable for thermoforming.

The natural fibers used are natural fibers that contain cellulose and, in many cases, lignin and/or hemicelluloses. They are, typically, wood fibers produced by chemical, mechanical or chemomechanical pulping of softwood or hardwood. Examples of such pulps are chemical pulp such as sulfate or sulfite pulp, thermomechanical pulp (TMP), mechanical fiber intended for medium density fiberboard (MDF-fiber) or chemo-thermomechanical pulp (CTMP) . The fibers can also be produced by other pulping methods such as steam explosion pulping and from other cellulosic or lignocellulosic raw materials such as flax, jute, hemp, kenaf, bagasse, cotton, bamboo, straw or rice husk.

The cross linking agent used in accordance with the present disclosure is a substance which contains chemical groups that may react to form at least two covalent bonds with groups in the cellulose or lignin. Suitable cross linking agents include organic carboxylic acids having at least two carboxyl groups, glyoxal (oxalaldehyde), reaction products of glyoxal with dimethyl urea or reaction products of glyoxal with urea and formaldehyde and possibly with alcohols such as 1,3-bis(hydroxymethyl)-4,5-dihydroxyimidazolidine-2 or its reaction products, reaction products of urea and formaldehyde with possible alcohols or amines such as dimethylol urea or bis(methoxymethyl) urea and reaction products of melamine and formaldehyde. Most these require the presence of a catalyst.

A preferred cross linking agent is citric acid. This cross linking agent is cheap, non-toxic and environmentally friendly and does not require a catalyst.

The weight ratio of cellulosic or lignocellulosic fibers to cross linking agent is typically between 50:1 to 1.5:1.

In the process of impregnating the cellulose or lignocellulose fibers with the cross linking agent, the cross linking agent must be adsorbed onto the fiber surfaces and for maximum efficiency also absorbed into the pores of the fiber structures. In line with the invention, the cross linking agent is dissolved in a solvent which is able to penetrate into these pores.

For citric acid this solvent is, preferably, water. Impregnation of the fibers with the cross linking agent solution can be accomplished by the spraying of this onto the fibers while these are carried in an air stream in a conduit, such as the blowline of a mechanical pulp refiner or a tube reactor designed especially for the purpose or in a fluidized bed coater (Wurster coater or top-sprayed fluidized bed coater). After this operation the fibers can be carried further by the air-stream into a drier, such as a flash drier, for drying. During drying, the temperature of the fibers is kept below 150°C, to ensure that essentially no cross linking reaction takes place.

To accomplish impregnation of the fibers with the cross linking agent, there is also a possibility to spray the solution of the cross linking agent onto the fibers while these are agitated or tossed around in a drum blender or a drum mixer, such as a rotating drum wherein fibers are exposed to spraying of the cross linking agent.

The cross linking agent can also be impregnated into the fibers from a solution in which the fibers are suspended. After this operation, the excess solution has to be pressed out of the fibers to be cycled back to the process. After this the fibers can be dried to be prepared for inclusion into a dry-laid mat. In this case, it is especially favorable to dry the fibers by the method used for fluff pulp drying which provides the pulp in the form of sheets which are of a looser structure than those of normal commodity pulps and therefore easier to disintegrate in the following process steps. During the drying, the conditions are such that the temperature of the fibers does not exceed 150°C, to ensure that essentially no cross linking reaction takes place. Preferably, drying is carried out at a temperature of from 30°C to 110°C, more preferably from 50°C to 110°C, most preferably from 70°C to 110°C.

In another embodiment especially pertaining to mechanical pulps, the cross linking agent can be added in the dilution water of the pulp refiner, alternatively the cross linking agent can be added before introducing cellulosic or lignocellulosic material into a mechanical pulp refiner. A prerequisite for this is that the cross linking agent is water soluble, such as citric acid. With this form of addition the impregnation will take place simultaneously with the disintegration of the raw material into pulp and there will be no need for a separate impregnation step. The impregnated fiber can be led directly from the blowline of the refiner to drying before they are applied into a dry-laid mat.

According to the present invention, the dry-laid mat is formed by dry forming. The mat may be manufactured in the form of porous webs, sheets or mats by what is commonly denoted air-laying technology, of which there are several different varieties available to the skilled person. The fibrous material can be provided to the air laying line in the form of loose material or in the form of sheets. If the fibrous material is provided to the air laying line in the form of a sheet, this sheet normally needs to be disintegrated before feeding into the line. This is most conveniently done in an appropriate device installed in-line with the air-layer, usually a hammer mill. The air-laid mats can be made solely out of the fibers mixed or impregnated with the cross linking agent or these may be combined with a suitable amount of thermoplastic polymer fibers, which function as a binder to hold the mats or sheets together. If a larger amount of thermoplastic polymer fibers are used, these will also melt and form a matrix around the natural fibers after consolidation. The binder/matrix polymer can also be applied to the fiber mat in powder or liquid form according to methods known to the skilled person.

If the matrix polymer is of a non-polar and hydrophobic nature such as a polyolefin, it is preferable that at least one additive in the form of a coupling agent is incorporated into the mat. A coupling agent is a polymer of similar chemistry as the matrix polymer, which has been co-polymerized or grafted with entities that can form covalent bonds with groups in cellulose or lignin, usually maleic anhydride or silanes. These bonds will attach polymer chains to the, originally often polar and hydrophilic, fiber surface and thus compatibilize it to the matrix polymer. In many cases, this coupling agent is included in the formulation of the polymer binder fiber.

If the matrix polymer is a thermoplastic polymer which is a condensation product such as a polyester or polyamide, it is possible that the presence of the cross linking agent, especially if this is an acid such as citric acid, will bring about the hydrolysis of bonds in the polymer and self form a bond with part of the polymer chain and thus couple this to the fiber surface. In this case the cross linking agent will also act as a coupling agent and compatibilize the fiber to the polymer with the advantages explained above.

Examples of matrix polymers include polyethylene (PE), polypropylene (PP), high-density polyethylene (HDPE), low-density polyethylene (LDPE), linearlow density polyethylene (LLDPE), polybutene, polybutadiene, other polyolefins, polyvinyl chloride (PVC), polyamide (PA), acrylonitrile butadiene styrene (ABS), polystyrene (PS), polylactic acid (PLA), polycaprolactone, polyglycolide (PGA), ethylene vinyl acetate (EVA). The matrix polymer may be a recycled material. The matrix polymer may be partly or entirely biobased.

The mats formed in accordance with the present invention are subsequently thermoformed into 3D-structures and also consolidated in this operation. The mats typically become dense composites, with a maximum amount of contact surface and a minimum amount of voids, after the thermoforming. The cross linking reaction, i.e. the curing, is taking place in this thermoforming step.

Therefore, the duration, time and temperature used in the thermoforming is such that the cross linking reaction occurs. The thermoforming step is carried out according to methods known in the art.

### Examples

For the composite sheets, MDF (medium density fiberboard) type wood fibers were refined from 100% Norway spruce chips in a one stage mechanical refining process. In the refining, the cooking temperature was 195 °C, steam flow 200 l/min and refiner pressure 8 bars. After the refining, the fibers were dried at ambient conditions to a moisture content of 6-8%.

Part of the fiber batch were subsequently impregnated with aqueous citric acid solution by spraying in a drum blender until the amount of citric acid had reached 5% dry citric acid on dry fiber weight. They were dried at ambient temperature to a moisture content of approx 8%.

Mixed wood fiber-polymer mats were formed by the process commonly known as air-laying on a Spike air-laying line of 60 cm width. The mats contained 90% of the untreated or treated MDF fiber and 10% of a PP/PE bicomponent binder fiber, AL Adhesion II (ES Fibervisions, Denmark) of 6 mm length. The fiber mixtures were passed through the separating parts of the line twice to ensure sufficient mixing. The mats were passed through a single zone bonding oven twice to make sure the major part of the binder fibers had been activated.

In the following examples these mats were pressed into flat plates to produce specimens for mechanical and water absorption testing but these mats may also be pressed into complex 3D structures with double curvatures in similar pressing operations or by matched rigid moulds.

### Example 1

Mats of untreated and citric acid treated fibers were preheated to 150-155 ⁰C in a laboratory oven. One or two layers, depending on initial grammage, were put on a flat steel plate heated to approximately 180 ⁰C and covered with baking paper and pressed at 20 MPa. Pressing time at full pressure was 3 s which gave a total cycle time, i.e. the time the mat was in contact with the heated mold, of approximately 30 s. The temperatures of the pressed composite plates were measured upon unloading with an IR thermometer and found to be 165-170 ⁰C. Resulting grammages were in the 2200 to 2500 g/m² range and these and the thicknesses differed somewhat at different lateral positions on the plates, probably due to variations in the air-laying process.

Test specimens for mechanical and water absorption testing were cut from the plates by laser cutting.

Tensile testing conformed to ISO 527 with the exception that the test specimens, type A, had a thickness of 2.7-3.7 mm instead of 4 mm. The thickness of each specimen was measured individually before the testing to be used in the calculation of the tensile strength and modulus for the specimen.

Flexural testing conformed to ISO 178 with the exception that a few of the test specimens had a thickness slightly below the 3-5 mm interval specified in the standard for specimens of 10 mm width. The thickness of each specimen was measured individually before the testing to be used in the calculation of the flexural strength and modulus for the specimen.

The results of the mechanical testing of the 20 MPa samples are presented in Table 1 where a comparison is made of the mechanical properties of composite materials from untreated fibers and fibers treated with citric acid.

**Table 1: Mechanical properties of composite plates from untreated and citric acid treated fibers pressed at 20 MPa.**

| Citric acid treatment of fibers | Tensile strength | Tensile modulus | Flexural strength | Flexural modulus |
|---|---|---|---|---|
| (Y/N) | (MPa) | (GPa) | (MPa) | (GPa) |
| N | 12 | 2.1 | 15 | 1.4 |
| Y | 21 | 3.1 | 28 | 2.5 |

Water absorption was measured in partial accordance with SS EN 15534-1. The deviations were that there was only one test specimen of each kind, these were not dried before the immersion but conditioned at 23 ⁰C and 50% Rh for at least 48 h, that the water temperature was 23 ⁰C and the periodicity of the measurement was different as is shown in Table 2 where the weight increase upon immersion for different time periods is presented.

**Table 2: Water absorption of composite plates from untreated and citric acid treated fibers pressed at 20 MPa.**

| Citric acid treatment of fibers (Y/N) | Weight increase due to water absorption (%) | | | | |
|---|---|---|---|---|---|
| | 0 h | 2 h | 24 h | 72 h | 168 h |
| N | 0,0 | 94 | 106 | 119 | 124 |
| Y | 0,0 | 16 | 47 | 68 | 76 |

### Example 2

Mats of untreated and citric acid treated fibers were heated as above, put in two layers and pressed at 100 MPa. Pressing time at full pressure was 3 s which gave a total cycle time, i.e. the time the mat was in contact with the heated mold, of approximately 40 s. The temperatures of the pressed composite plates were measured upon unloading with an IR thermometer and found to be 170-172 ⁰C. Resulting grammages were around 2100 g/m² but these and the thicknesses differed somewhat at different lateral positions on the plates, probably due to variations in the air-laying process. Test specimens for mechanical and water absorption testing were cut from the plates by laser cutting.

Tensile testing conformed to ISO 527 with the exception that the test specimens, type A, had a thickness of 2.2-2.6 mm instead of 4 mm. The thickness of each specimen was measured individually before the testing to be used in the calculation of the tensile strength and modulus for the specimen.

Flexural testing conformed to ISO 178 with the exception that the test specimens had a thickness below the 3-5 mm interval specified in the standard for specimens of 10 mm width. The thickness of each specimen was measured individually before the testing to be used in the calculation of the flexural strength and modulus for the specimen.

The results of the mechanical testing of the 100 MPa samples are presented in Table 3 where a comparison is made of the mechanical properties of composite materials from untreated fibers and fibers treated with citric acid

**Table 3: Mechanical properties of composite plates from untreated and citric acid treated fibers pressed at 100 MPa.**

| Citric acid treatment of fibers | Tensile strength | Tensile modulus | Flexural strength | Flexural modulus |
|---|---|---|---|---|
| (Y/N) | (MPa) | (GPa) | (MPa) | (GPa) |
| N | 19 | 4.0 | 23 | 3.0 |
| Y | 27 | 4.1 | 35 | 3.1 |

Water absorption was measured in partial accordance with SS EN 15534-1. The deviations were that there was only one test specimen of each kind, these were not dried before the immersion but conditioned at 23 ⁰C and 50% Rh for at least 48 h, that the water temperature was 23 ⁰C and the periodicity of the measurement was different as is shown in Table 4 where the weight increase upon immersion for different time periods is presented.

**Table 4: Water absorption of composite plates from untreated and citric acid treated fibers pressed at 100 MPa.**

| Citric acid treatment of fibers (Y/N) | Weight increase due to water absorption (%) | | | | |
|---|---|---|---|---|---|
| | 0 h | 2 h | 24 h | 72 h | 168 h |
| N | 0,0 | 16 | 48 | 63 | 69 |
| Y | 0,0 | 14 | 41 | 48 | 52 |

It is to be noted in the results presented above that there are significant differences in both strengths and water absorption despite that the times the samples have resided in temperatures where crosslinking is thought to occur is very short and it may be suggested that longer residence times would have increased the effect of the citric acid.

In view of the above detailed description of the present invention, other modifications and variations will become apparent to those skilled in the art. However, it should be apparent that such other modifications and variations may be effected without departing from the scope of the appended claims.

## Claims

1. A method for manufacturing a dry-laid mat suitable for thermoforming, comprising the steps of
a) impregnating cellulosic or lignocellulosic fibers with a cross linking agent dissolved in a solvent which is able to penetrate into the pores of the fiber structures, so that the cross linking agent is adsorbed onto the fiber surfaces and also absorbed into the pores of the fiber structures, followed by drying the mixture of cellulosic or lignocellulosic fibers and cross linking agent at such conditions that the temperature of the fibers does not exceed 150°C; followed by
b) forming a mat comprising the product of step a), said product of step a) having a moisture content of less than 10 wt-%, by a dry forming process carried out at such conditions that the temperature of the fibers does not exceed 150°C, wherein the mat formed in step b) comprises at least one thermoplastic polymer.

2. The method according to claim 1, wherein the mat formed in step b) comprises at least one coupling agent.

3. The method according to claim 1 or 2, wherein the dry forming in step b) is carried out by air-laying.

4. The method according to any one of claims 1-3, wherein the cross linking agent is an organic carboxylic acid having at least two carboxyl groups.

5. The method according to claim 4, wherein the cross linking agent is citric acid.

6. The method according to any one of claims 1-5, wherein the cellulosic or lignocellulosic fibers are provided in the form of chemical pulp, thermomechanical pulp (TMP), mechanical fiber intended for medium density fiberboard (MDF) or chemo-thermomechanical pulp (CTMP).

7. The method according to any one of claims 1-6, wherein the impregnation in step a) is carried out by spraying the cross linking agent onto the fibers while these are carried in an air stream in a conduit.

8. The method according to claim 7, wherein the conduit is the blowline of a mechanical pulp refiner or a tube reactor or a fluidized bed coater.

9. The method according to claim 1-6, wherein the impregnation is carried out in a drum blender or drum mixer.

10. The method according to claim 1-5, wherein the impregnation is carried out before introducing cellulosic or lignocellulosic material into a mechanical pulp refiner or the cross linking agent is provided in the dilution water of the refiner.

11. The method according to any one of claims 1-10, followed by thermoforming, wherein the thermoforming is carried out at a temperature of from 150°C to 220°C and at a pressure of from 1 to 100 MPa during a time sufficient to cure the crosslinking agent.

## Patentansprüche

1. Verfahren zur Herstellung einer zur Thermoformung geeigneten trockengelegten Matte, umfassend die Schritte des
a) Imprägnierens von Cellulose- oder Lignocellulosefasern mit einem in einem Lösungsmittel gelösten Vernetzungsmittel, das in die Poren der Faserstrukturen eindringen kann, sodass das Vernetzungsmittel an den Faseroberflächen adsorbiert und auch in die Poren der Faserstrukturen absorbiert wird, gefolgt von der Trocknung der Mischung aus Cellulose- oder Lignocellulosefasern und Vernetzungsmittel unter derartigen Bedingungen, dass die Temperatur der Fasern 150 °C nicht überschreitet; gefolgt von
b) Formen einer das Produkt aus Schritt a) umfassenden Matte, wobei das Produkt aus Schritt a) einen Feuchtigkeitsgehalt von weniger als 10 Gew.-% aufweist, durch ein Trockenformungsverfahren, das unter derartigen Bedingungen durchgeführt wird, dass die Temperatur der Fasern 150 °C nicht überschreitet, wobei die in Schritt b) geformte Matte zumindest ein thermoplastisches Polymer umfasst.

2. Verfahren nach Anspruch 1, wobei die in Schritt b) gebildete Matte wenigstens einen Haftvermittler umfasst.

3. Verfahren nach Anspruch 1 oder 2, wobei die Trockenformung in Schritt b) durch Luftlegen durchgeführt wird.

4. Verfahren nach einem der Ansprüche 1-3, wobei das Vernetzungsmittel eine organische Carbonsäure mit wenigstens zwei Carboxylgruppen ist.

5. Verfahren nach Anspruch 4, wobei das Vernetzungsmittel Zitronensäure ist.

6. Verfahren nach einem der Ansprüche 1-5, wobei die Celluloseoder Lignocellulosefasern in Form von chemischem Zellstoff, thermomechanischem Zellstoff (TMP), mechanischen Fasern für mitteldichte Faserplatten (MDF) oder chemo-thermomechanischem Zellstoff (CTMP) bereitgestellt werden.

7. Verfahren nach einem der Ansprüche 1-6, wobei die Imprägnierung in Schritt a) durch Aufsprühen des Vernetzungsmittels auf die Fasern erfolgt, während diese in einem Luftstrom in einer Leitung befördert werden.

8. Verfahren nach Anspruch 7, wobei es sich bei der Leitung um die Blasleitung eines mechanischen Zellstoffveredlers oder eines Rohrreaktors oder eines Wirbelschichtbeschichters handelt.

9. Verfahren nach Anspruch 1-6, wobei die Imprägnierung in einem Fassmischer oder Trommelmischer durchgeführt wird.

10. Verfahren nach Anspruch 1-5, wobei die Imprägnierung vor dem Einbringen von Cellulose- oder Lignocellulosematerial in einen mechanischen Zellstoffveredler durchgeführt wird oder das Vernetzungsmittel in dem Verdünnungswasser des Veredlers bereitgestellt wird.

11. Verfahren nach einem der Ansprüche 1-10, gefolgt von einer Thermoformung, wobei die Thermoformung bei einer Temperatur von 150 °C bis 220 °C und einem Druck von 1 bis 100 MPa während einer für die Aushärtung des Vernetzungsmittels ausreichenden Zeit durchgeführt wird.

## Revendications

1. Un procédé de fabrication d'un mat déposé à sec approprié pour le thermoformage, comprenant les étapes
a) d'imprégnation de fibres cellulosiques ou lignocellulosiques avec un agent de réticulation dissous dans un solvant qui est capable de pénétrer dans les pores des structures fibreuses, de sorte que l'agent de réticulation est adsorbé sur les surfaces des fibres et également absorbé dans les pores des structures fibreuses, suivie par le séchage du mélange de fibres cellulosiques ou lignocellulosiques et de l'agent de réticulation selon des conditions dans lesquelles la température des fibres ne dépasse pas 150 °C ; suivie par
b) la formation d'un mat comprenant le produit de l'étape a), ledit produit de l'étape a) ayant une teneur en humidité inférieure à 10 % en poids, par un procédé de formage à sec effectué selon des conditions dans lesquelles la température des fibres ne dépasse pas 150 °C, dans lequel le mat formé dans l'étape b) comprend au moins un polymère thermoplastique.

2. Le procédé selon la revendication 1, dans lequel le mat formé dans l'étape b) comprend au moins un agent de couplage.

3. Le procédé selon la revendication 1 ou 2, dans lequel le formage à sec dans l'étape b) est effectué par dépôt à l'air.

4. Le procédé selon l'une quelconque des revendications 1 à 3, dans lequel l'agent de réticulation est un acide carboxylique organique ayant au moins deux groupes carboxyle.

5. Le procédé selon la revendication 4, dans lequel l'agent de réticulation est l'acide citrique.

6. Le procédé selon l'une quelconque des revendications 1 à 5, dans lequel les fibres cellulosiques ou lignocellulosiques sont fournies sous la forme de pâte chimique, de pâte thermomécanique (TMP), de fibre mécanique destinée à un panneau de fibres de densité moyenne (MDF) ou de pâte chimio-thermomécanique (CTMP).

7. Le procédé selon l'une quelconque des revendications 1 à 6, dans lequel l'imprégnation dans l'étape a) est effectuée en pulvérisant l'agent de réticulation sur les fibres tandis que celles-ci sont transportées dans un courant d'air dans un conduit.

8. Le procédé selon la revendication 7, dans lequel le conduit est la conduite de soufflage d'un raffineur de pâte mécanique ou d'un réacteur tubulaire ou d'une coucheuse à lit fluidisé.

9. Le procédé selon les revendications 1 à 6, dans lequel l'imprégnation est effectuée dans un mélangeur à tambour ou un malaxeur à tambour.

10. Le procédé selon les revendications 1 à 5, dans lequel l'imprégnation est effectuée avant l'introduction de la matière cellulosique ou lignocellulosique dans un raffineur de pâte mécanique ou l'agent de réticulation est fourni dans l'eau de dilution du raffineur.

11. Le procédé selon l'une quelconque des revendications 1 à 10, suivi d'un thermoformage, dans lequel le thermoformage est effectué à une température de 150 °C à 220 °C et à une pression de 1 à 100 MPa pendant un temps suffisant pour durcir l'agent de réticulation.
